# EUROPÄISCHE PATENTANMELDUNG

(11) **EP 3 875 886 A1**
(43) Veröffentlichungstag der Anmeldung: **08.09.2021**
(21) Anmeldenummer: 21160167.9
(22) Anmeldetag: 02.03.2021
(51) Int. Cl.: F42B 3/11, B23K 1/00, B23K 1/20

(54) **ZÜNDERSOCKEL**

(30) Priorität: 04.03.2020 DE 102020202794
(71) Anmelder: Electrovac Hacht und Huber GmbH, 94121 Salzweg (DE)
(72) Erfinder: THUMFART, Dieter, 3400 Klosterneuburg (AT); SCHROTTENBAUM, Manuel, 94157 Perlesreut (DE)
(74) Vertreter: Grünecker Patent- und Rechtsanwälte PartG mbB

(57) **Zusammenfassung**

Die vorliegende Erfindung betrifft einen Zündersockel (1) sowie ein Verfahren zu dessen Herstellung. Ein solcher Zündersockel (1) umfasst einen elektrisch leitfähigen Grundkörper (2) mit einer Durchgangsöffnung (3), wobei die Oberfläche des Grundkörpers (2) eine Nickelbeschichtung aufweist, einen in der Durchgangsöffnung (3) angeordneten ersten Leiter (4), eine in der Durchgangsöffnung (3) angeordnete und den ersten Leiter (4) gegenüber der Durchgangsöffnung (3) elektrisch isolierende Glasdichtung (5), und einen zweiten Leiter (6), der am Grundkörper (2) angelötet ist. Die Nickelbeschichtung des Grundkörpers (2) ermöglicht die Verwendung eines Palladium-freien Lotmaterials und somit erhebliche Kosteneinsparungen bei der Fertigung des Zündersockels.

## Beschreibung

Die vorliegende Erfindung betrifft einen Zündersockel gemäß dem Oberbegriff des Patentanspruchs 1 und ein Verfahren zum Herstellen eines Zündersockels gemäß dem Oberbegriff des Patentanspruchs 10.

Solche Zündersockel finden insbesondere als Bestandteil von pyrotechnischen Zündeinrichtungen zur Aktivierung von Produkten der passiven Verkehrssicherheit in automobilen Systemen Verwendung. Die bekanntesten Anwendungsbeispiele sind hier Airbagzünder und Gurtstraffer bei Kraftfahrzeugen. Im Fall einer Kollision senden Crashsensoren einen elektrischen Impuls an die Zündeinrichtung, wodurch ein Treibsatz, also eine pyrotechnische Ladung, gezündet wird, um ein rasches und sicheres Entfalten des Airbags und Straffen des Gurts zu bewirken.

Darüber hinaus sind pyrotechnische Zündeinrichtungen, in denen Zündersockel nach der im Oberbegriff des Patentanspruchs 1 definierten Gattung verbaut sind, mittlerweile auch in einer Vielzahl anderer (nicht nur automobiler) Anwendungsfälle verbreitet. Beispielhaft wären hier automatisch aufblasende Rettungswesten und Rettungsboote, Notrutschen für Flugzeuge und/oder Batterietrennsysteme zu nennen.

Allen Anwendungen gemein ist aber, dass eine Zündeinrichtung im Aktivierungsfall einer erheblichen mechanischen Kurzzeitbelastung, ähnlich einem Schlag, ausgesetzt ist, weshalb besondere Anforderungen an ihre mechanische Stabilität gestellt werden. Zum anderen darf im inaktiven Zustand durch die Zündeinrichtung der erforderliche Schutz der Initiatorladung vor Luftfeuchtigkeitsänderungen oder anderen rauen Umgebungsbedingungen nicht gefährdet werden, weshalb die Zündeinrichtung auch im Hinblick auf ihre Dichtigkeit besonderen Anforderungen genügen muss.

Durch den Zündersockel wird mittels elektrischer Anschlüsse der Strom zum Zünden des Treibsatzes geleitet. Daher weist der Zündersockel zwei Leiter auf, die auf der einen Seite mittels einer Steckverbindung mit elektrischem Strom versorgt werden können und auf der anderen Seite beispielsweise mittels einer Zündbrücke verbunden sind, die beim Stromdurchfluss in Kontakt mit dem Treibmittel die Zündung desselben bewirken. Der Zündersockel wird daher auch allgemein als "Durchführungselement" bezeichnet. Bei der Auslegung des Durchführungselements muss sichergestellt werden, dass bei der Zündung des Treibsatzes auf jeden Fall eine Kappe oder ein Deckel der Zündeinrichtung abreißt und nicht die Leiter vom Zündersockel getrennt werden.

Für solche Zündersockel hat sich auf dem Markt eine Konfiguration durchgesetzt, bei der ein erster Leiter als Pin in einem elektrisch isolierenden Fixiermaterial in einer Durchgangsöffnung eines Grundkörpers (Bodenplatte) fixiert ist. Als Fixiermaterial wird üblicherweise ein Glasmaterial, insbesondere ein Weichglas, verwendet. Dadurch ist dieser erste Leiter zum Grundkörper durch Glas isoliert. Ein zweiter Leiter als Pin ist durch eine Lötverbindung am Grundkörper fixiert. Da der zweite Leiter direkt mit dem Grundkörper verbunden ist, kann über diesen zweiten Leiter (Masseleiter) vorteilhafterweise eine einfache Erdung des Zünders erfolgen.

Eine wichtige Einflussgröße für die Funktionstauglichkeit und Ausfallsicherheit der Zündeinrichtung stellt die Qualität der Lötverbindung zwischen dem zweiten Leiter und dem Grundkörper dar. Insbesondere in sicherheitsrelevanten Vorrichtungen (wie beispielsweise in Airbagzündern) kann ein Zündersockel mit einer mangelhaften Lötverbindung nämlich zu einem Versagen führen, welches die körperliche Unversehrtheit des jeweiligen Benutzers gefährden kann.

Im Fall einer stumpfen Lötverbindung zum im Wesentlichen rechtwinkligen Anbinden einer im Wesentlichen planen Stirnfläche eines dünnen Leiters (Pins) an eine Oberfläche des Grundkörpers wird von visuell guten Lötstellen gesprochen, wenn das Lot an den benetzbaren Flächen flache Benetzungswinkel ausbildet, die in einer tangentialen Kurve verbunden sind. Diese konkave Ausbildung bezeichnet man als "Lotmeniskus". Der Lotmeniskus muss über den gesamten Umfang des Leiters deutlich ausgebildet sein, wobei hier der Durchmesser des Lotmeniskus in Draufsicht als Maßstab für die Qualität der Lötverbindung herangezogen werden kann.

Zudem soll der Lotmeniskus über eine möglichst geringe Höhe, im nachfolgenden als "Lothochzug" bezeichnet, am Leiter ansteigen, weil unnötige Lotverdickungen am Leiter zum einen mit teuren Lotverlusten und zum anderen mit einer weniger deutlichen Ausprägung des Lotmeniskus und somit einer geringeren Stabilität der Lötverbindung einhergehen.

Das Lot kann seinen Zweck aber nur dann erfüllen, wenn es mit den Werkstoffen der Fügeteile eine Verbindung eingeht. Das schmelzflüssige Lot, vorzugsweise Hartlot, muss hierzu die Werkstücke an den Verbindungsstellen benetzen. Beim Löten kann eine Benetzung durch das Lot nur dann erreicht werden, wenn an der Verbindungsstelle Verunreinigungen (z.B. Fett, Öl, Farbe, Schmutz usw.) entfernt werden. Außerdem ist zu beachten, dass durch Einwirken des Luftsauerstoffes Oberflächen unedler Metalle mit einer Oxidschicht überzogen sind. Diese Oxidschicht verhindert eine Benetzung des Grundwerkstoffes. Das Lot perlt auf der Oberfläche ab und haftet daher nicht.

Insbesondere das letztgenannte Problem der Oxidbildung an einer zu verlötenden Oberfläche ist im Hinblick auf den Grundkörper des Zündersockels als kritisch anzusehen, da dieser zur Gewährleistung einer guten Korrosionsbeständigkeit zumeist aus Edelstahl gefertigt ist. Im Laufe des Produktionsprozesses muss der Grundkörper zudem durch einen Durchlaufofen geführt werden, wo trotz Schutzgasatmosphäre immer auch Spuren an Sauerstoff und Wasserdampf verbleiben. Gepaart mit der hohen Sauerstoff-Affinität der im Edelstahl enthaltenen Legierungsbestandteile (insbesondere Chrom) führt dies unweigerlich zur Bildung von Metalloxiden an der Oberfläche des Grundkörpers, welche aufgrund ihrer Polarität die Benetzung mit dem Lot behindern.

Zur Behebung des vorgenannten Problems ist die Wahl eines passenden Lotmaterials (in passender Menge pro Bauteil) von ausschlaggebender Bedeutung. Nur im Fall eines passenden Lotmaterials (mit einem geeigneten Schmelzbereich und einer hohen Toleranz gegenüber Oxiden) kann das flüssige Lot die Oberfläche des Grundkörpers gut benetzen und somit einen gut definierten Lotmeniskus ausbilden.

Derzeit werden Lotmaterialen auf Silber/Kupfer-Basis zur Herstellung der Lötverbindung zwischen dem zweiten Leiter (Masseleiter) und dem Grundkörper des Zündersockels verwendet. In diesem Zusammenhang kommen u.a. beispielsweise die folgenden Lotmaterialien verbreitet zum Einsatz (Angaben in [%] stellen jeweils Massenanteile dar):

**Tabelle 1**

| **Lotmaterial** | **Ag [%]** | **Cu [%]** | **Pd [%]** | **Solidus-Liquidus [°C]** | **Arbeitstemperatur [°C]** | **Spez. Gewicht [g/cm3]** |
|---|---|---|---|---|---|---|
| SCP 1 | 68,4 | 26,6 | 5 | 807-810 | 815 | 10,1 |
| SCP 2 | 58,5 | 31,5 | 10 | 824-852 | 860 | 10,1 |
| SCP 3 | 65 | 20 | 15 | 850-950 | 905 | 10,3 |

Insbesondere durch das Lotmaterial SCP 3 wird aufgrund des in ihm mit einem Massenanteil von 15% enthaltenen Palladiums eine hohe Toleranz bei der Benetzung von oxidhaltigen Metallflächen erreicht, sodass SCP 3 derzeit ein bevorzugtes Standard-Lot auf dem Gebiet der Zündersockelfertigung ist.

Diesbezüglich ist aber zu beachten, dass Palladium ein ausgesprochen teures Edelmetall (Platinmetall) ist. Da zudem seit Beginn des 21. Jahrhunderts die Verwendung von Palladium in Fahrzeugkatalysatoren zur Abgasreinigung vorgesehen ist und die Automobilindustrie einen großen Wirtschaftsfaktor darstellt, kam es zu einer verstärkten Nachfrage nach Palladium, was dessen Preis weiter in die Höhe getrieben hat. So liegt nach aktuellem Stand der Palladiumpreis deutlich höher als der Goldpreis.

Insbesondere in der unter immensem Kostendruck stehenden Automobilzulieferindustrie, sind aber Kosteneinsparungen, insbesondere auf der Materialkostenseite, immer dringend geboten.

Von den oben erläuterten Gegebenheiten ausgehend ist es Aufgabe der vorliegenden Erfindung, einen Zündersockel sowie ein Verfahren zum Herstellen eines Zündersockels anzugeben, mit denen auf kostengünstige Weise eine durchgehend gute metallische Verbindung zwischen dem Grundkörper und dem zweiten Leiter gewährleistet werden kann.

Erfindungsgemäß wird diese Aufgabe durch einen Zündersockel mit den Merkmalen des Patentanspruchs 1 sowie durch ein Verfahren zum Herstellen eines Zündersockels mit den Merkmalen des Patentanspruchs 10 gelöst.

Dementsprechend wird erfindungsgemäß ein Zündersockel bereitgestellt, welcher umfasst:
- einen elektrisch leitfähigen Grundkörper mit einer Durchgangsöffnung, wobei die Oberfläche des Grundkörpers eine Nickelbeschichtung aufweist;
- einen in der Durchgangsöffnung angeordneten ersten Leiter;
- eine in der Durchgangsöffnung angeordnete und den ersten Leiter gegenüber der Durchgangsöffnung elektrisch isolierende Glasdichtung; und
- einen zweiten Leiter, der am Grundkörper angelötet ist.

Beim erfindungsgemäßen Zündersockel ist der Grundkörper vor dem Anlöten des zweiten Leiters (Masseleiters) vernickelt ("vorvernickelt") worden. Aus dem Richardson-Ellingham-Diagramm für Metall-Metalloxid-Reaktionen lässt sich entnehmen, dass das an der Oberfläche des Grundkörpers vorliegende Nickel bei Weitem nicht so bereitwillig oxidiert, also gegenüber Sauerstoff bei Weitem nicht so affin ist, wie beispielsweise die regelmäßig in Edelstahl als Legierungszusätze verwendeten Elemente Chrom und Mangan. Infolgedessen ist die den Lotfluss (die Benetzung) behindernde Oxidbildung an der Oberfläche eines nickelbeschichten Grundkörpers deutlich weniger ausgeprägt. Daher können beim erfindungsgemäßen Zündersockel der Lotfluss-verbessernde Palladium-Gehalt im Lotmaterial deutlich verringert und die Herstellungskosten somit in erheblichem Maße reduziert werden. Außerdem wird die Robustheit des Lötprozesses extrem erhöht. Der Ausschuss in der Fertigung und das Risiko für Feld-Ausfälle sinkt in beträchtlichem Maße.

Bei einer bevorzugten Ausführungsform des Zündersockels ist der Grundkörper als ein ringförmiges metallisches Element ausgebildet.

Die ringförmige, also symmetrisch zur zentralen Durchgangsöffnung, ausgebildete Kontur des Grundkörpers lässt sich vorteilhafterweise mit geringem Fertigungsaufwand, z. B. durch Stanzen, herstellen.

Eine weitere bevorzugte Ausführungsform des Zündersockels ist dadurch gekennzeichnet, dass der nickelbeschichtete Grundwerkstoff des Grundkörpers ein austenitischer Edelstahl, wie vorzugsweise AISI 304, AISI 304L oder AISI 304HQ, ist.

Der mit Nickel beschichtete Grundwerkstoff des Grundkörpers ist vorzugsweise ein nichtrostender austenitischer Stahl, um die Funktionstauglichkeit und Ausfallsicherheit der mit dem Zündersockel ausgestatteten Zündeinrichtung über ihre gesamte Lebensdauer zu erhalten.

In besonders bevorzugter Weise ist die Nickelbeschichtung als Nickel-Strike-Schicht auf dem Grundkörper aufgebracht.

Üblicherweise dient Nickel-Strike, auch Anschlagnickel genannt, nur dazu, um Edelstahl für die galvanische Beschichtung vorzubehandeln. Von den Erfindern wurde jedoch erkannt, dass eine ultradünne Nickel-Strike-Schicht (mit Schichtdicken im Zehntel-Mikrometer-Bereich) bereits ausreichend ist, um eine Nickelbeschichtung zu bilden, welche die das Löten beeinträchtigenden Oxide von der Oberfläche hochlegierter Metalle entfernt und somit den Einsatz neuartiger Palladium-armer oder Palladium-freier Lotzusammensetzungen ermöglicht.

In einer noch weiteren Ausführungsform des Zündersockels weist die Nickelbeschichtung des Grundkörpers eine Schichtdicke von minimal 0,15 µm und maximal 1 µm, bevorzugt von minimal 0,2 µm und maximal 0,8 µm, auf.

Es wurde festgestellt, dass bereits eine ultradünne Nickelbeschichtung mit einer Dicke von maximal 1 µm, bevorzugt von maximal 0,8 µm, ausreichend ist, um die Lötbarkeit der Oberfläche des Grundkörpers mit der Oberfläche des zweiten Leiters zu verbessen. Aus Gründen der Prozesssicherheit (Vermeidung von Fehlstellen) sollte die Nickelbeschichtung dabei eine Dicke von minimal 0,15 µm, bevorzugt von minimal 0,2 µm, nicht unterschreiten.

Ferner ist gemäß einer bevorzugten Ausführungsform vorgesehen, dass der zweite Leiter stumpf an eine Stirnseite des Grundkörpers angelötet ist.

Der zweite Leiter (Pin), der den Kontakt zum Grundkörper herstellt, wird also in dieser Ausführungsform im Gegensatz zum ersten Leiter (Pin) nicht in einer Durchgangsöffnung fixiert, sondern großflächig mit der Stirnseite des Grundkörpers verlötet. Somit entfällt vorteilhafterweise das Stanzen einer zweiten Durchgangsöffnung, die hohen Anforderungen hinsichtlich der Genauigkeit ihres Durchmessers genügen müsste.

Außerdem kann in einer besonders vorteilhaften Ausgestaltung des Zündersockels das zum Anlöten des zweiten Leiters am Grundkörper verwendete Lot ein Hartlot auf Silber/Kupfer-Basis mit einem Massenanteil an Palladium unterhalb von 5,0% sein.

Hartlote zum Löten eignen sich für mechanisch stärker beanspruchte Verbindungen. Die Verarbeitungstemperaturen liegen zwischen ca. 500-1000 °C. In DIN EN ISO 17672:2017-01 sind alle Hartlote in Gruppen aufgeschlüsselt.

Durch die Nickelbeschichtung wird die Ausbildung einer Oxidschicht an der Oberfläche des Grundkörpers, insbesondere während des bei der Zündersockelherstellung notwendigen Prozessschrittes der kontinuierlichen Erwärmung in einem Durchlaufofen, reduziert oder unterdrückt, sodass die Umstellung auf erheblich kostengünstigere Hartlotmaterialen mit geringeren Palladium-Anteilen und demzufolge mit einer höheren Empfindlichkeit gegenüber Oxiden ermöglicht wird.

Eine weitere besonders vorteilhafte Ausgestaltung der Erfindung besteht darin, dass das zum Anlöten des zweiten Leiters am Grundkörper verwendete Lot ein Palladium-freies Hartlot, insbesondere ein Hartlot auf Basis einer Palladium-freien Silber-Kupfer-Germanium-Legierung, ist.

Mit einer solchen Hartlotzusammensetzung lässt sich die vorvernickelte Oberfläche des Grundkörpers rissfrei mit der Leiteroberfläche verlöten. Ein Palladium-Anteil, um eine Benetzung zwischen der Oberfläche des Grundkörpers und dem geschmolzenen Hartlot zu ermöglichen, wird nicht benötigt, sodass eine Lötverbindung mit einer solchen Hartlotzusammensetzung kostengünstiger bereitgestellt werden kann.

Des Weiteren ist bevorzugt, dass im Zündersockel der erste Leiter und der zweite Leiter jeweils als ein stiftförmiges metallisches Element, insbesondere aus einer Nickel-Eisen-Legierung, ausgebildet sind.

Die stiftförmige Ausgestaltung der Leiter ermöglicht eine einfache elektrische Kontaktierung mit einem entsprechenden Stecker. Eisen-Nickel Legierungen sind dabei aufgrund ihrer thermischen und elektrischen Eigenschaften besonders geeignet, als Stifte für Airbagzünder eingesetzt zu werden.

Darüber hinaus wird erfindungsgemäß ein Verfahren zum Herstellen eines Zündersockels bereitgestellt, welches die Verfahrensschritte umfasst:
- Erzeugen eines elektrisch leitfähigen Grundkörpers mit einer Durchgangsöffnung aus einem Halbzeug vordefinierter Dicke durch zumindest einen Trennvorgang und/oder eine spanabhebende Bearbeitung und/oder einen Kaltumformvorgang;
- Fixieren eines ersten Leiters innerhalb der Durchgangsöffnung mittels einer elektrisch isolierenden Glasdichtung; und
- Fixieren eines zweiten Leiters am Grundkörper mittels eines Lötvorgangs, wobei vor dem Lötvorgang das Halbzeug oder der daraus erzeugte Grundkörper mit einer Nickelbeschichtung versehen wird.

Wie bereits oben für den erfindungsgemäßen Zündersockel erläutert, zeichnet sich das erfindungsgemäße Verfahren dadurch aus, dass der Grundkörper oder bereits das zu seiner Herstellung verwendete Halbzeug vor dem Anlöten des zweiten Leiters mit einer Nickelbeschichtung versehen wird. Bevorzugt wird die Nickelbeschichtung aber in einem Prozessschritt aufgebracht, welcher zumindest einem Trenn- und/oder Verformungsprozess zur Herstellung des Grundkörpers folgt. Ein Vorteil davon ist, dass ein Ausdünnen bzw. Schädigen der Beschichtung in Folge des oder der Trenn- und/oder Verformungsprozesse vermieden und somit eine verbesserte Beschichtungs- bzw. Lötqualität erreicht wird.

Unter "Nickelbeschichtung" wird hier und im Folgenden ein Überzug aus reinem Nickel oder aus einer Nickellegierung verstanden. Die Nickelbeschichtung für die Anwendung des erfindungsgemäßen Verfahrens enthält mindestens einen Massenanteil an Nickel von 80% und wird bevorzugt elektrolytisch auf den Grundkörper (z. B. aus Edelstahl) aufgebracht, wobei alternative Beschichtungsverfahren, wie z. B. chemische oder autokatalytische Abscheidung, ebenfalls angewendet werden können. Für alle Ausführungsbeispiele kann die Beschichtung grundsätzlich auch lediglich für einen insbesondere für die Lötung vorgesehenen Oberflächenteil des Grundkörpers vorgesehen sein.

Gemäß einer besonders bevorzugten Ausführungsform beinhaltet das Verfahren, dass die Nickelbeschichtung unter Anwendung eines Nickel-Strike-Verfahrens auf das Halbzeug oder den daraus erzeugten Grundkörper mit einer Schichtdicke von 0,15 µm bis 1 µm, bevorzugt von 0,2 µm bis 0,8 µm, aufgebracht wird.

Um eine sukzessive Passivierung zu umgehen, behilft man sich bei einer Edelstahllegierung mit einer Aktivierung, d.h. man beizt in Anwesenheit von Nickelchlorid, sodass eine Vernickelung bereits im Beizbad unter Sauerstoffausschluss stattfindet. In der Galvanik ist dieses Vorbehandlungsverfahren als Nickel-Strike-Verfahren bekannt. Zum elektrolytischen Beschichten von Edelstahl wird dabei ein spezielles Nickelbad benutzt, das einen extrem niedrigen pH-Wert (stark basisches Milieu) und eine sehr hohe Chloridkonzentration aufweist, der sog. "Nickel-Strike".

Vorteilhafterweise kann außerdem vorgesehen sein, dass der Grundkörper durch einen Stanzvorgang aus dem Halbzeug herausgetrennt wird.

Dabei wird sowohl die äußere Kontur des Grundkörpers als auch die Durchgangsöffnung, in der der erste Leiter mittels eines Weichglases (Erweichungspunkt bei ca. 700 °C) fixiert wird, durch einen Stanzvorgang erzeugt. Das Stanzen ist ein einfacher, massentauglicher und kostengünstiger Prozess, sodass die Kosten bei der Herstellung des Zündersockels weiter gesenkt werden können.

Weiter ist besonders bevorzugt, dass das Fixieren des ersten Leiters und des zweiten Leiters zeitgleich realisiert wird.

In einem kontinuierlichen Prozess (meist dadurch, dass die Baugruppe in einem Durchlaufofen erhitzt wird) können die beiden Leiter gleichzeitig am Grundkörper fixiert werden, wodurch eine maximale Kosteneffizienz bei der Herstellung des Zündersockels gewährleistet wird.

In diesem Zusammenhang wird besonders vorteilhaft eine Graphit-Form mit den separaten Komponenten, bestehend aus Grundkörper, erstem Leiter, zweitem Leiter, Glas-Preform und Lot-Preform, bestückt und die bestückte Graphit-Form in einem Durchlaufofen unter Schutzgasatmosphäre für eine bestimmte Zeit auf eine bestimmte Temperatur erwärmt und anschließend wieder abgekühlt, sodass das Einglasen des ersten Leiters in der Durchgangsöffnung und das Anlöten des zweiten Leiters am Grundkörper sichergestellt wird.

Um die Leiter am Grundkörper zu fixieren, werden die Leiter und der Grundkörper in einer Graphit-Form durch einen Durchlaufofen hindurchgeführt, in welchem die ebenfalls in die Graphit-Form eingelegten Preforms aus Glas und Lotmaterial schmelzen und danach wieder erstarren. Auf diese Weise können die Zündersockel mittels eines hocheffizienten kontinuierlichen Verfahrens produziert werden. Je nach der beim Einglasen und Löten erzielbaren Freiheit der Oberfläche von Kontaminationen kann noch eine nachträgliche Reinigung notwendig werden.

Alternativ kann der zweite Leiter (Pin) aber auch bereits in einem vorgelagerten Prozessschritt mit dem Lotmaterial "vorbelotet" werden, sodass anschließend die Bestückung der Graphit-Form mit einer Einheit, gebildet aus dem beloteten zweiten Leiter (Pin), erleichtert wird.

Schließlich ist die Erfindung insbesondere auch auf einen Airbagzünder gerichtet, der einen vorgenannten Zündersockel oder einen nach einem vorgenannten Verfahren hergestellten Zündersockel umfasst.

Mit dem hier vorgestellten Zündersockel und dem zugehörigen Herstellungsverfahren können auf kostengünstige Weise sichere Airbagzünder mit einer zuverlässigen Lötverbindung zwischen dem zweiten Leiter (Masseleiter) und dem Grundkörper bereitgestellt werden. Gerade die Automobilzulieferindustrie wird von den Automobil-OEM unter Kostendruck gesetzt und gibt diesen an ihre Lieferanten weiter. Demzufolge sind Produktkostensenkungen durch innovative Materialkombinationen hier besonders willkommen.

Weitere Merkmale, Anwendungsmöglichkeiten und Vorteile der Erfindung ergeben sich aus der nachfolgenden Beschreibung von Ausführungsbeispielen, die in den Figuren dargestellt sind. Es zeigen:
- Fig. 1A und 1B: einen erfindungsgemäßen Zündersockel in zwei perspektivischen Ansichten von der Innenseite (Fig. 1A), die der Zündkappe der endmontierten Zündeinrichtung zugewandt ist, und von der Außenseite (Fig. 1B), welche die Seite des Anschlusskontaktes repräsentiert;
- Fig. 2A und 2B: Seiten- und Draufsichten auf zwischen einem stiftförmigen Leiter und einem plattenförmigen Grundkörper gebildete stumpfe Lötverbindungen;
- Fig. 3A und 3B: mikroskopische Aufnahmen in Draufsicht auf eine Lötstelle bei einem erfindungsgemäß vorvernickelten Grundkörper unter Verwendung eines neuen Lots mit reduziertem Palladium-Anteil (Fig. 3A) und bei einem unvernickelten Grundkörper unter Verwendung eines neuen Lots mit reduziertem Palladium-Anteil (Fig. 3B);
- Fig. 4A und 4B: mikroskopische Aufnahmen in perspektivischer Ansicht auf eine Lötstelle bei einem erfindungsgemäß vorvernickelten Grundkörper unter Verwendung eines neuen Lots mit reduziertem Palladium-Anteil (Fig. 4A) und bei einem unvernickelten Grundkörper unter Verwendung eines neuen Lots mit reduziertem Palladium-Anteil (Fig. 4B);
- Fig. 5A und 5B: mikroskopische Aufnahmen in Seitenansicht auf eine Lötstelle bei einem erfindungsgemäß vorvernickelten Grundkörper unter Verwendung eines neuen Lots mit reduziertem Palladium-Anteil (Fig. 5A) und bei einem unvernickelten Grundkörper unter Verwendung eines neuen Lots mit reduziertem Palladium-Anteil (5B);
- Fig. 6: eine schematische Draufsicht auf die aus Einzelkomponenten bestehende Baugruppe vor dem Erwärmen im Durchlaufofen und auf den nach der Erwärmung im Durchlaufofen und anschließender Abkühlung aus der Baugruppe entstandenen erfindungsgemäßen Zündersockel.

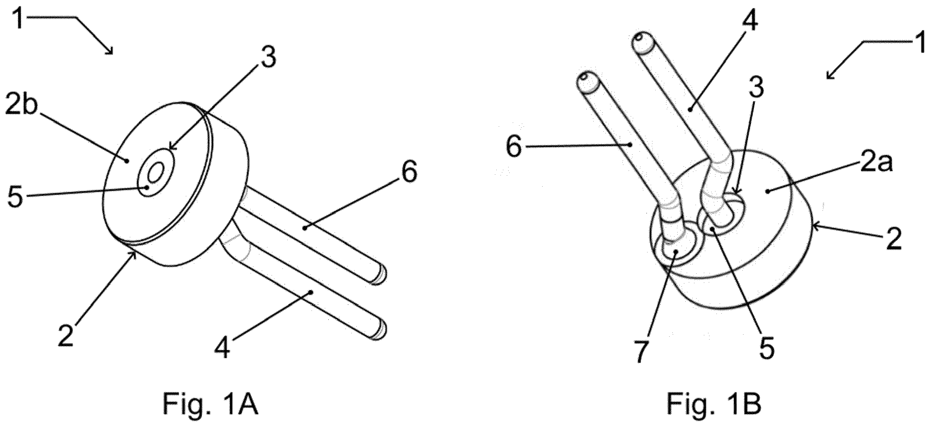

In Fig. 1A und 1B ist ein bevorzugtes Ausführungsbeispiel eines erfindungsgemäßen Zündersockels 1 in zwei perspektivischen Ansichten wiedergegeben. Grundsätzlich besteht ein solcher Zündersockel 1 aus einem ringförmigen metallischen Grundkörper 2, an dem zwei Leiter 4, 6, in Form von Metallstiften, fixiert sind.

Zur Fixierung des ersten stiftförmigen Leiters 4 weist der Zündersockel 1 eine mittig angeordnete, durch den Grundkörper 2 hindurchgehende Durchgangsöffnung 3 auf. Die Außenkontur und zylindrische Durchgangsöffnung 3 des Grundkörpers 2 kann aus einem Halbzeugteil vordefinierter Dicke ausgestanzt werden. Erfindungsgemäß wird der Grundkörper 2 mitsamt der Durchgangsöffnung 3 mit einer Nickelbeschichtung versehen, wobei die Dicke der Nickelbeschichtung bevorzugt 0,15 µm bis 1 µm, besonders bevorzugt 0,2 µm bis 0,8 µm, beträgt.

Der erste stiftförmige Leiter 4 wird durch die Durchgangsöffnung 3 derart hindurchgeführt, dass er auf der der Innenseite des Zündersockels 1 - das ist die Stirnseite 2b, die der Zündkappe der endmontierten Zündvorrichtung zugewandt ist - bündig mit der Stirnseite 2b des Grundkörpers abschließt, während er auf der Außenseite - das ist die Stirnseite 2a, welche die Seite des Anschlusskontaktes, bevorzugt an eine Steckverbindung, repräsentiert - einen Überstand aufweist, welcher der Länge des zweiten stiftförmigen Leiters 6 entspricht. Der aus der im Einbauzustand nach außen gerichteten Stirnseite 2a herausragende Abschnitt des ersten stiftförmigen Leiters 4 und des zweiten stiftförmigen Leiters 6 weist jeweils eine Biegung auf, um einen für den Anschlusskontakt erforderlichen Abstand zwischen den beiden stiftförmigen Leitern 4, 6 herzustellen.

Zum Fixieren des ersten Metallstifts 4 in der ersten Durchgangsöffnung 5 wird ein Glasmaterial als elektrisch isolierendes Fixiermaterial verwendet, das zum Herstellen der Fixierung erwärmt wird. Nach Abkühlung erstarrt das Glasmaterial unter Ausbildung einer ringförmigen, hermetisch dichten und den ersten stiftförmigen Leiter 4 vom Grundkörper 2 elektrisch isolierenden Verbindung. Dadurch wird die sichere Funktion des gesamten pyrotechnischen Systems gewährleistet.

Der zweite stiftförmige Leiter 6 dient als Massepin und ist gemäß Fig. 1B mit einer Stirnseite 2a des Grundkörpers 2 verlötet, die im späteren Einbauzustand zur Außenseite der Zündeinrichtung hin freiliegt und dem Anschluss eines Kontakts (z.B. Steckverbinders) zur Stromversorgung dient. Der Arbeitsschritt zum Fixieren des ersten Metallstifts 4 in der Durchgangsöffnung 3 mittels der Glasdichtung 5 wird bevorzugt zeitgleich mit dem Arbeitsschritt zum Fixieren des zweiten Metallstifts 6 mittels der Lötverbindung durchgeführt. Dadurch ist ein maximaler Durchsatz durch die Produktionsanlage mit gleichzeitig niedrigsten Anlagekosten und damit Herstellungskosten erzielbar.

Der zweite stiftförmige Leiter 6 ist hierzu mit einer im Wesentlichen planen Stirnfläche versehen, welche stumpf mit der Oberfläche des Grundkörpers 2 verlötet wird. Eine solche stumpfe Verlötung ist vorteilhaft, weil der Grundkörper 2 dann mit nur einer Durchgangsöffnung 3 für den ersten stiftförmigen Leiter 4 versehen werden muss. Als Lotmaterialien werden bislang bevorzugt Silber/Kupfer-Basislote gemäß den in Tabelle 1 gezeigten Zusammensetzungen SCP 1, SCP 2 und SCP 3 oder gemäß ähnlichen Zusammensetzungen eingesetzt, die zu den Hartloten für spezielle Verwendungszwecke zählen. Diese Hartlote SCP 1, SCP 2 und SCP 3 liegen als Multikomponentensysteme vor und beinhalten als zwingenden Bestandteil jeweils Palladium, um die Benetzungs- und Fließfähigkeit des Lots 7 zu verbessern und so eine sichere mechanische sowie elektrische Verbindung zwischen den Kontaktoberflächen des Grundkörpers 2 und des zweiten Leiters (Massepins) 6 zu gewährleisten. Das Hartlot fungiert hier also quasi als "metallischer Kleber", um eine gute metallische Verbindung zwischen den beiden zu verbindenden Lötflächen (des Grundkörpers 2 und des zweiten Leiters 6) herzustellen.

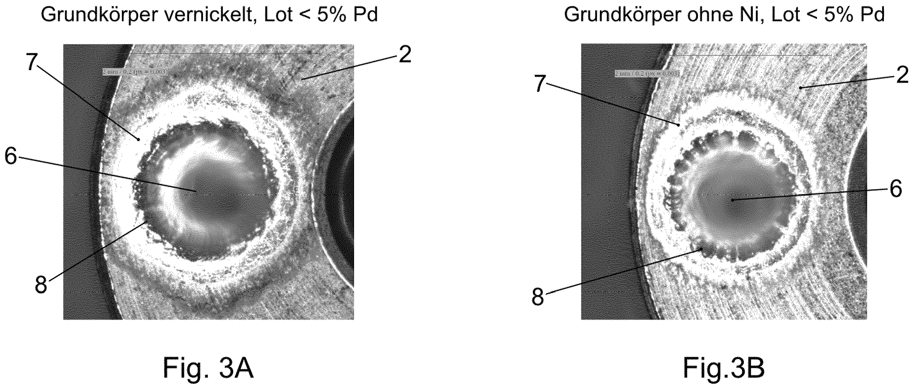

Es gilt allerdings zu beachten, dass eine derartige stumpfe Lötverbindung zum Abscheren der Stifte neigt und den Nachteil geringer Vibrationsfestigkeit aufweist. Demzufolge werden an die Qualität der Lötstellen zwischen Grundkörper 2 und zweitem Leiter (Massestift) 6 hohe Anforderungen gestellt. Die Ausbildung eines über den gesamten Umfang des zweiten Leiters (Massestifts) 6 einwandfreien Lotmeniskus 8 ist unabdingbar. Speziell kann beim Schritt der visuellen Endkontrolle eine ordnungsgemäße Verbindung zwischen der Grundkörperoberfläche und dem rechtwinklig dazu angebrachten zweiten Leiter 6 daran erkannt werden, ob über den gesamten Umfang des Leiters 6 ein deutlich ausgeprägter Lotmeniskus 8 gebildet ist. Eine solche visuelle Endkontrolle lässt sich durch die mikroskopische Auswertung des Reflexionsmusters der Lötstelle, wie jeweils in Fig. 3A und 3B gezeigt, realisieren. Hierzu kann beispielsweise eine vollautomatisierte 100%-Kameraprüfung der Lötstellen im kontinuierlichen Durchlauf erfolgen.

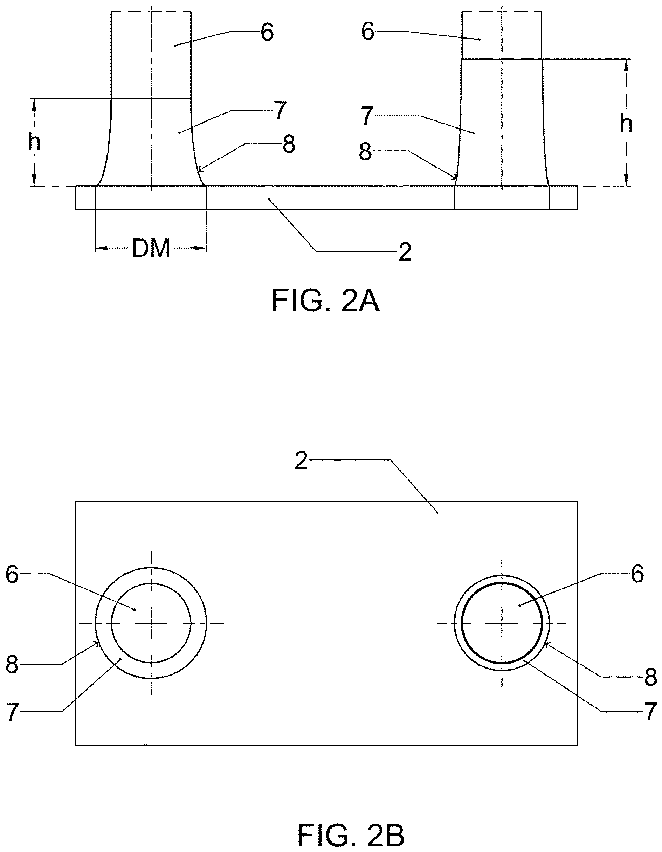

Fig. 2A und 2B zeigen jeweils in idealisierter Form zwei Lötverbindungen mit unterschiedlich ausgebildeten Lotmenisken 8 in Seitenansicht (Fig. 2A) und Draufsicht (Fig. 2B).

Bei der jeweils auf der linken Seite in Fig. 2A und 2B dargestellten stumpfen Lötverbindung zwischen dem Stirnende eines stiftförmigen Leiters 6 und einer Oberfläche eines plattenförmigen Grundkörpers 2 liegt ein deutlich erkennbarer Lotmeniskus 8 mit einer konkaven Formbildung (Hohlkehle) vor. Der Durchmesser DM des Lotmeniskus 8 ist vorteilhafterweise verhältnismäßig groß und die Höhe des Lotanstiegs am Leiterende, der sogenannte Lothochzug h, ist vorteilhafterweise verhältnismäßig klein.

Demgegenüber hat sich bei der jeweils auf der rechten Seite in Fig. 2A und 2B dargestellten stumpfen Lötverbindung zwischen einem Stirnende eines stiftförmigen Leiters 6 gleichen Durchmessers und derselben Oberfläche des plattenförmigen Grundkörpers 2 ein deutlich schwächer ausgeprägter Lotmeniskus 8 eingestellt. Gegenüber dem auf der linken Seite von Fig. 2A und 2B gezeigten Verlauf des Lots 7 ist der Durchmesser des Lotmeniskus 8 deutlich verringert und der Lothochzug h am Leiterende deutlich vergrößert. Die durch einen derart schwach ausgeprägten Lotmeniskus 8 bereitgestellte Stabilität der Lötverbindung ist gegenüber der Stabilität der auf der anderen Seite des Grundkörpers 2 dargestellten Lötverbindung mit stark ausgeprägtem Lotmeniskus 8 deutlich herabgesetzt. Demzufolge ist es das Ziel einen Lotmeniskus 8 mit einem möglichst großen Durchmesser DM und einem möglichst geringen Lothochzug h, wie bei der Lötverbindung auf der linken Seite von Fig. 2A und 2B verwirklicht, zu erreichen.

Fig. 3A und 3B zeigen jeweils lichtmikroskopische Aufnahmen der Lötverbindung zwischen dem zweiten stiftförmigen Leiter (Massepin) 6 und der Oberfläche des Grundkörpers 2 des Zündersockels 1. Dabei werden die Lötstellen stets normiert in der Draufsicht gezeigt, um die Vollständigkeit des ringförmig um den zentral gezeigten Leiter 6 gebildeten Lotmeniskus 8 auswerten zu können.

Die Verwendung Palladium-haltiger Lote wurde bisher als unerlässlich betrachtet, da sich aufgrund der fertigungstechnischen Gegebenheiten bei der Zündersockelherstellung (insbesondere aufgrund der Erwärmung in einem Durchlaufofen) auf der Edelstahloberfläche des Grundkörpers 2 Oxide bilden. Diese Oxidschicht (überwiegend Chrom-Oxide) behindern den Lötfluss. Hier greift das im Lotmaterial enthaltene Palladium korrektiv ein. Es mildert das Problem der Oxidbildung, indem das Lotmaterial gegenüber der Oxidschicht robuster wird. Wenn aber bei konventionell hergestellten Zündersockeln Lote mit reduziertem (oder sogar ohne) Palladium-Anteil eingesetzt werden, steigt die Empfindlichkeit gegenüber Oxidverunreinigungen sofort an. Der Lotmeniskus 8, d.h. die charakteristische konkav geformte Lötstellenoberfläche, kann sich nicht ordentlich ausbilden, sodass die Edelstahloberfläche des Grundkörpers 2 nicht gut benetzt wird. Dies birgt aber die große Gefahr, dass der zweite Leiter (Massepin) 6 nicht ordentlich auf dem Grundkörper 2 hält.

Durch die Anwendung von (wesentlich billigeren) Silber/Kupfer-Legierungen mit reduziertem oder gar ohne Palladium-Anteil als Lotmaterial lassen sich demzufolge nicht alle Ansprüche, die an die Qualität der Lötverbindung in einer sicherheitsrelevanten Umgebung gestellt werden, erfüllen. So zeigt Fig. 3B die Verwendung einer derartigen Lotzusammensetzung mit einem Palladium-Massenanteil von nur noch unter 5% im Fall eines konventionellen, unbeschichteten Grundkörpers 2 aus Edelstahl. Der als dunkle Ring erkennbare Lotmeniskus 8 weist entlang seines Umlaufs um den ersten Leiter 6 deutlich erkennbare Fehlstellen auf. Ein solcher Lotmeniskus 8 ist aber im Hinblick auf eine sichere elektrische Kontaktierung vollkommen inakzeptabel. Diese in Fig. 3B zu erkennenden Schwach- und Fehlstellen können die Ausgangspunkte für Risse bilden, welche bei den ständigen Vibrationsbelastungen im eingebauten Zustand des Zündersockels 1 schlimmstenfalls zu einem Bruch der Lötverbindung zwischen Grundkörper 2 und zweitem Leiter (Massestift) 6 führen. Dies hätte aber einen irreversiblen Funktionsausfall der gesamten Zündeinrichtung zur Folge, was z. B. im Fall der Verwendung des Zündersockels 1 als Bestandteil eines Airbagzünders eine Gefährdung von Leib und Leben des Fahrzeuginsassen mit sich bringen würde.

Das Problem bei Lotmaterialien mit reduziertem oder fehlendem Palladium-Anteil ist dabei vor allem die gestiegene Empfindlichkeit gegenüber auf der Edelstahloberfläche des Grundkörpers 2 im Laufe des Produktionsprozesses entstehenden Oxiden. Um aber die mit einer vorgenannten Lotzusammensetzung einhergehenden erheblichen Kosteneinsparungspotentiale ausschöpfen zu können, wird von den Erfindern der vorliegenden Erfindung erstmals vorgeschlagen vor dem Lötvorgang die Oberfläche des Grundkörpers 2 mit einer sehr dünnen Nickelbeschichtung (von unter 1 µm Schichtdicke, bevorzugt sogar von unter 0,8 µm Schichtdicke) zu versehen. Hierzu wird nach Herstellung (z. B. durch zumindest einen Trennvorgang und/oder eine spanabhebende Bearbeitung und/oder einen Kaltumformvorgang) des Grundkörpers 2 auf seine Oberfläche (zumindest auf den Teil seiner Oberfläche der später eine Lötverbindung mit dem zweiten Leiter 6 eingeht) in einem Nickel-Strike-Bad elektrochemisch eine sehr dünne Nickelschicht aufgetragen. Vor dem Nickelauftrag muss gegebenenfalls zuerst die Oxidschicht des Edelstahls (z. B. in einem Salzsäurebad) von der Grundkörperoberfläche entfernt werden.

Fig. 3A zeigt hierbei das Lötbild im Fall eines erfindungsgemäßen Zündersockels 1, bei dem die mit einer Nickelbeschichtung versehene Edelstahloberfläche des Grundkörpers 2 mittels eines Palladium-armen Lots 7 mit einem Massenanteil an Palladium von unter 5% verlötet wurde. Wie aus der Fig. 3A erkennbar, bildet sich entlang des gesamten Umfangs ein durchgehender Lotmeniskus 8, der sich aufgrund der Reflexionseigenschaften des erstarrten Lotmaterials gegenüber seiner Umgebung deutlich durch einen dunkleren Farbton absetzt.

Die mit der Nickelbeschichtung einhergehenden Vorteile bestehen darin, dass aufgrund der geringen Sauerstoff-Affinität von Nickel die Oxidbildung erheblich reduziert wird. Dieser Vorteil stellt sich bereits dann ein, wenn nur eine ultradünne Nickelbeschichtung mit einer Schichtdicke von weniger als 1 µm, bevorzugt von weniger als 0,8 µm, aufgebracht wird. Aus Gründen der Prozesssicherheit sollte dabei ein Minimalwert der Schichtdicke von 0,15 µm, bevorzugt von 0,2 µm, nicht unterschritten werden. Dadurch kann vermieden werden, dass die Nickelbeschichtung insbesondere an den für die Lötung vorgesehenen Bereichen, ausgedünnt bzw. geschädigt wird, wodurch die Qualität der Lötung negativ beeinflusst werden könnte. Bisher hat man es nicht für möglich gehalten, in einem Zündersockel 1 mit einer derart ultradünnen Nickelbeschichtung irgendwelche Vorteile im Hinblick auf die Qualität und Wirtschaftlichkeit der Lötung zu erhalten. Erst die Anstrengungen der Erfinder zeigen die Machbarkeit dessen.

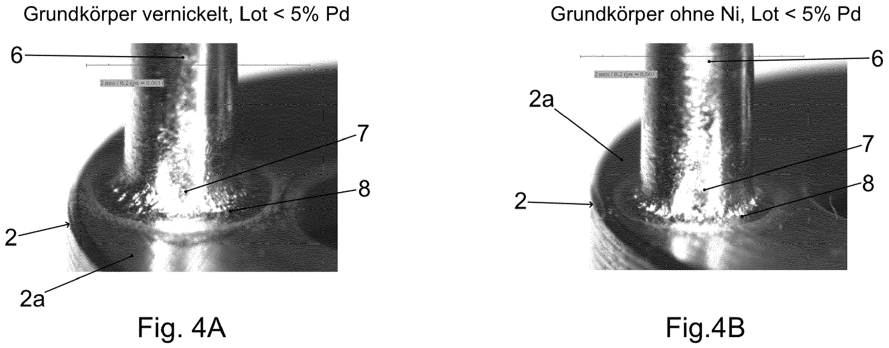

Fig. 4A und 4B zeigen jeweils die lichtmikroskopische Perspektivansicht auf die zwischen dem zweiten Leiter (Massepin) 6 und der Oberfläche des Grundkörpers 2 des Zündersockels 1 ausgebildete Lötstelle.

In Fig. 4A ist der Grundkörper 2 wiederum in erfindungsgemäßer Weise vor dem Lötvorgang mit einer ultradünnen Nickelbeschichtung (im Zehntel-Mikrometer-Bereich) versehen (vorvernickelt) worden. Solche ultradünnen Nickelbeschichtungen lassen sich mittels eines sogenannten Nickel-Strike-Verfahrens realisieren, indem der zu beschichtende Grundkörper 2 (vorzugsweise nach Abschluss aller an ihm notwendigen Umform- und/oder Trennoperationen) in ein elektrolytisches, galvanisches Nickel-Strike-Bad eingetaucht wird. Solche Bäder enthalten neben mindestens einer Nickelverbindung immer Säure und oft mindestens einen Glanzbildner. Sie enthalten gegebenenfalls z.B. NaCl als Beizverstärker und/oder falls nötig glanzbildende Additive.

Wie aus Fig. 4A erkennbar, liegt ein deutlich ausgeprägter (konkav geformter) Lotmeniskus 8 vor, der in gleichmäßiger Weise an der kompletten Verbindungsfläche von zweitem Leiter 6 und Grundkörper 2 ausgebildet ist. Die Wahrscheinlichkeit, dass sich bei einem derart deutlich ausgeprägten Lotmeniskus 8 aufgrund von thermo-mechanischen Belastungen Risse ausbilden, welche die strukturelle Integrität des Zündersockels 1 und damit des gesamten Zündsystems gefährden könnten, ist daher als äußerst gering anzusehen.

Entgegengesetzte Schlussfolgerungen müssen hingegen für die in Fig. 4B in lichtmikroskopischer Perspektivansicht gezeigte Lötverbindung gezogen werden, bei der ein konventioneller, nicht mit Nickel beschichteter Grundkörper 2 mittels eines Palladium-armen Lots 7 (< 5 Massen-% Pd) mit dem zweiten Leiter 6 verbunden ist. Solche Palladium-armen Lote 7 sind zwar preislich sehr attraktiv, jedoch bisher aufgrund ihres schlechteren Benetzungs- und Fließverhaltens in der Zündersockelherstellung für nicht einsetzbar erachtet worden. Aufgrund der fehlenden Nickelbeschichtung ist das Benetzungs- und Fließverhaltens jedoch unzureichend, um gemäß Fig. 4B über den gesamten Umfang des Leiters 6 einen deutlich ausgeprägten Lotmeniskus 8 zu bilden. Stattdessen liegen deutlich erkennbare Schwach- oder Fehlstellen vor, die den Ausgangspunkt für Mikrorisse bilden können.

Die Erfinder haben dabei erstmals erkannt, dass bereits eine ultradünne Nickelbeschichtung (im Zehntel-Mikrometer-Bereich), wie sie durch Nickel-Strike-Verfahren auftragbar ist, ausreicht, um eklatante Verbesserungen im Lötbild auch bei Verwendung von preiswerten Palladium-freien oder Palladium-armen Loten zu erreichen. Wie aus Fig. 3A und Fig. 4A hervorgeht, kann sich auch bei solchen Loten 7 jeweils ein vollständiger (konkav geformter) Lotmeniskus 8 ohne Schwach- oder Fehlstellen ausbilden.

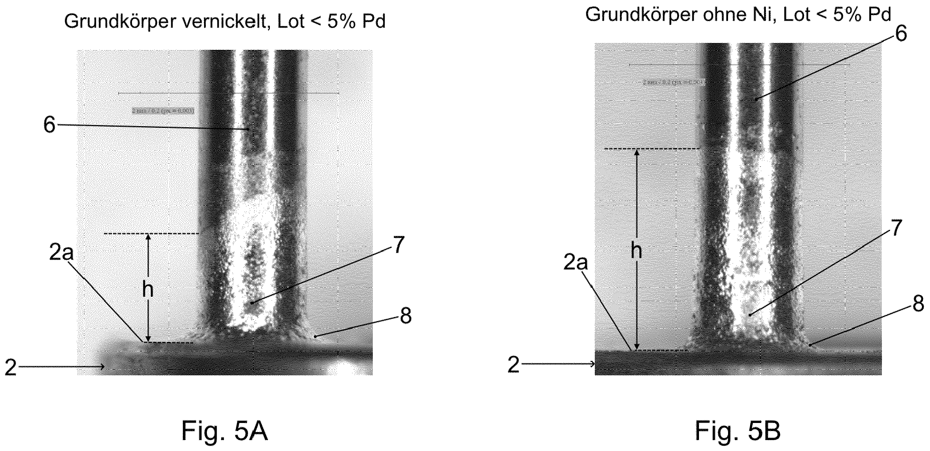

Gemäß den in Seitenansicht auf die Lötverbindung zwischen Grundkörper 2 und Leiter 6 erstellten lichtmikroskopischen Aufnahmen nach Fig. 5A und 5B lässt sich der Lothochzug h, also die Höhe in mm, entlang welcher das Lotmaterial am Leiter 6 des Zündersockels 1 ansteigt, erfassen. Fig. 5A zeigt in Seitenansicht den Lotmeniskus 8 eines erfindungsgemäßen Zündersockels 1, bei dem ein neues Lot 7 mit reduziertem Palladium-Massenanteil von unter 5% zum Verlöten des zweiten Leiters (Massepins) 6 mit der vorvernickelten Oberfläche des Grundkörpers 2 zum Einsatz gelangt, wohingegen Fig. 5B in Seitenansicht den Lotmeniskus 8 eines Zündersockels 1 zeigt, bei dem ein konventioneller Grundkörper 2 mit unvernickelter Oberfläche mittels des gleichen Palladium-armen Lots 7 mit einem zweiten Leiter (Massepin) 6 verlötet wurde.

Durch die Adhäsion des Lots 7 entsteht dabei - abhängig vom Benetzungswinkel - jeweils ein als Lothochzug h bezeichneter Anstieg des Lots 7 am verlöteten Leiterende. Ein zu großer Lothochzug h entlang des Leiters 6 ist aber nicht erwünscht, da ein solcher nicht mehr zur Stabilitätssteigerung der Lötverbindung beiträgt und deshalb mit unwirtschaftlichen Lotverlusten einhergeht und da zudem unnötige Lotverdickungen entlang des Umfangs des zweiten Leiters 6 der mechanischen Stabilität der Lötverbindung abträglich sein können.

Aus den anhand von Fig. 5A und 5B vorgenommenen Vermessungen des Lothochzugs h ergibt sich, dass im Fall einer durchgeführten Vorvernickelung des Grundkörpers 2 auch bei der Verwendung eines neuen Lots 7 mit einem reduzierten Palladium-Massenanteil von unter 5% (Fig. 5A) jeweils ein Lothochzug h vorliegt, der deutlich kleiner ausfällt als der entsprechende Lothochzug h bei Anwendung derselben Lotzusammensetzung bei einem unbehandelten (unvernickelten) Grundkörper 2 (Fig. 5B). Folglich werden auch im Hinblick auf den Parameter Lothochzug h vom erfindungsgemäßen Zündersockel 1 die extrem hohen Anforderungen an die Qualität der Lötverbindung eingehalten.

Die in Fig. 3A bis 5B lichtmikroskopisch dargestellten Lötergebnisse sind in den beiden folgenden Tabellen jeweils datenmäßig basierend auf einer Messreihe an 25 gefertigten Zündersockeln 1 wiedergegeben und gegenübergestellt. Dabei ist der zweite stiftförmige Leiter (Massepin) 7 jeweils als Rundstift mit einem Stiftdurchmesser von 1 mm ausgebildet.

**Tabelle 2**

| | **Durchmesser Lotmeniskus** | | |
|---|---|---|---|
| **Lot** | **15% Pd** | **< 5% Pd** | **< 5% Pd** |
| **Grundkörper** | **ohne Nickel** | **ohne Nickel** | **mit Nickel** |
| | 1,37 | 1,19 | 1,38 |
| | 1,35 | 1,20 | 1,41 |
| | 1,36 | 1,17 | 1,39 |
| | 1,36 | 1,18 | 1,38 |
| | 1,36 | 1,18 | 1,38 |
| | 1,34 | 1,20 | 1,39 |
| | 1,38 | 1,19 | 1,40 |
| | 1,36 | 1,19 | 1,40 |
| | 1,39 | 1,17 | 1,39 |
| | 1,37 | 1,18 | 1,38 |
| | 1,35 | 1,16 | 1,39 |
| | 1,34 | 1,17 | 1,37 |
| **Messwerte** | 1,35 | 1,19 | 1,40 |
| | 1,34 | 1,22 | 1,40 |
| | 1,37 | 1,17 | 1,40 |
| | 1,36 | 1,19 | 1,40 |
| | 1,37 | 1,18 | 1,39 |
| | 1,36 | 1,17 | 1,37 |
| | 1,35 | 1,18 | 1,40 |
| | 1,35 | 1,17 | 1,39 |
| | 1,33 | 1,19 | 1,38 |
| | 1,37 | 1,21 | 1,39 |
| | 1,36 | 1,20 | 1,41 |
| | 1,36 | 1,20 | 1,38 |
| | 1,34 | 1,18 | 1,40 |
| **Mittelwert** | **1,36** | **1,18** | **1,39** |
| **Sigma** | **0,015** | **0,013** | **0,012** |

**Tabelle 3**

| | **Höhe Lothochzug** | | |
|---|---|---|---|
| **Lot** | **15% Pd** | **< 5% Pd** | **< 5% Pd** |
| **Grundkörper** | **ohne Nickel** | **ohne Nickel** | **mit Nickel** |
| | 1,16 | 1,52 | 0,91 |
| | 1,05 | 1,66 | 1,09 |
| | 1,20 | 1,50 | 0,91 |
| | 1,16 | 1,47 | 0,88 |
| | 1,01 | 1,46 | 1,00 |
| | 1,09 | 1,71 | 0,94 |
| | 1,00 | 1,68 | 0,98 |
| | 1,23 | 1,67 | 0,94 |
| | 1,12 | 1,76 | 0,94 |
| | 1,06 | 1,59 | 0,99 |
| | 1,10 | 1,43 | 0,94 |
| | 1,19 | 1,67 | 1,00 |
| **Messwerte** | 1,13 | 1,31 | 0,95 |
| | 1,09 | 1,63 | 0,96 |
| | 1,04 | 1,54 | 1,01 |
| | 1,18 | 1,60 | 1,03 |
| | 1,04 | 1,44 | 0,88 |
| | 1,05 | 1,37 | 1,05 |
| | 1,07 | 1,53 | 0,99 |
| | 1,10 | 1,60 | 0,96 |
| | 1,01 | 1,49 | 0,98 |
| | 1,09 | 1,65 | 0,95 |
| | 1,13 | 1,61 | 0,98 |
| | 1,07 | 1,62 | 1,00 |
| | 1,11 | 1,60 | 0,94 |
| **Mittelwert** | **1,10** | **1,56** | **0,97** |
| **Sigma** | **0,061** | **0,108** | **0,049** |

In Tabelle 2 werden die gemäß Fig. 2B, 3A und 3B in Draufsicht auf die Lötstelle gemessenen Durchmesser DM des Lotmeniskus 8 (bezeichnet als "Messwerte") für drei unterschiedliche Ausführungsformen der Lot- und Substratmaterialien (zweite Tabellenspalte: Grundkörper ohne Nickelbeschichtung unter Verwendung eines Standard-Lots mit 15% Palladium-Massenanteil; dritte Tabellenspalte; Grundkörper ohne Nickelbeschichtung unter Verwendung eines neuen Lots mit unter 5% Palladium-Massenanteil; vierte Tabellenspalte: Grundkörper mit Nickelbeschichtung unter Verwendung eines neuen Lots mit unter 5% Palladium-Massenanteil) gegenübergestellt.

Entsprechend Tabelle 2 wird im Fall einer unbeschichteten, nickelfreien Edelstahloberfläche des Grundkörpers 2 bei der Verwendung eines Palladium-reichen Lots 7 mit einem Palladium-Massenanteil von 15% eine (in der zweiten Tabellenspalte angegebene) Verteilung des Durchmessers des Lotmeniskus 8 erreicht, die zwischen minimal 1,33 mm und maximal 1,39 mm schwankt. Demgegenüber tritt bei einer unbeschichteten, nickelfreien Grundkörperoberfläche, die unter Verwendung eines Palladium-armen Lots 7 mit einem Palladium-Massenanteil von unter 5% mit dem zweiten Leiter 6 verlötet wird, eine statistisch signifikante (in der dritten Tabellenspalte angegebene) Verkleinerung des Durchmessers des Lotmeniskus 8 auf einen Durchmesserbereich zwischen minimal 1,16 mm und maximal 1,22 mm ein. Dies entspricht im statistischen Mittel einer Verkleinerung des Durchmessers des Lotmeniskus 8 um 0,18 mm für den Fall der Verwendung eines Palladium-armen Lots mit einem Palladium-Massenanteil von unter 5%. Ein verkleinerter Durchmesser des Lotmeniskus 8 ist gleichbedeutend mit einem weniger deutlich ausgeprägten Lotmeniskus 8. Eine weniger deutliche Ausprägung des Lotmeniskus 8 signalisiert wiederum eine mechanisch instabilere Lötverbindung, die unter Erschütterungen, wie sie beispielsweise in einem fahrenden Auto auftreten, eventuell nachgibt und somit die elektrische Verbindung zum Grundkörper 2 des Zündersockels 1 nicht mehr aufrechtzuerhalten vermag.

Gemäß der vierten und letzten Spalte von Tabelle 2 werden für den Fall, dass ein besonders kostengünstiges Palladium-armes Lot mit einem Palladium-Massenanteil von unter 5% zum Verlöten des zweiten Leiters (Massepins) 6 mit einer vorvernickelten Edelstahloberfläche des Grundkörpers 2 zum Einsatz gelangt, Lotmenisken 8 erhalten, deren Durchmesser zwischen minimal 1,37 mm und maximal 1,41 mm schwanken. Dies entspricht im Mittel einer überaus deutlichen Vergrößerung des Lotmeniskus-Durchmessers um 0,21 mm für den Fall, dass bei einer gleichen Palladium-armen Lotzusammensetzung (< 5 Massen-% Pd) ein vorvernickelter anstatt eines unvernickelten Grundkörpers 2 zur Verwendung kommt. Je größer aber der Durchmesser des Lotmeniskus 8 desto kleiner ist die Wahrscheinlichkeit für die Entstehung von kritischen Rissen im Eckbereich der Lotgefüge bei thermo-mechanischen Belastungen.

In Tabelle 3 werden die gemäß Fig. 3A und 3B in Seitenansicht auf die Lötstelle gemessenen Anstiegshöhen (Lothochzug h) des Lots 7 am zweiten Leiter 6 (bezeichnet als "Messwerte") wiederum für drei unterschiedliche Ausführungsformen der Lot- und Substratmaterialien (zweite Tabellenspalte: Grundkörper ohne Nickelbeschichtung unter Verwendung eines Standard-Lots mit 15% Palladium-Massenanteil; dritte Tabellenspalte: Grundkörper ohne Nickelbeschichtung unter Verwendung eines neuen Lots mit unter 5% Palladium-Massenanteil; vierte Tabellenspalte: Grundkörper mit Nickelbeschichtung unter Verwendung eines neuen Lots mit unter 5% Palladium-Massenanteil) gegenübergestellt.

Entsprechend den in der zweiten Tabellenspalte angegebenen Messwerten wird im Fall einer unbeschichteten, nickelfreien Edelstahloberfläche des Grundkörpers 2 bei der Verwendung eines konventionellen Palladium-reichen Lots 7 mit einem Palladium-Massenanteil von 15% eine Höhenverteilung des Lothochzugs h gemessen, die zwischen minimal 1,00 mm und maximal 1,23 mm schwankt. Demgegenüber wird bei einem unvernickelten Grundkörper 2, der mit einem Lot 7, welches nur einen Palladium-Massenanteil von unter 5% aufweist (siehe dritte Tabellenspalte), eine statistisch signifikante Vergrößerung der Höhenverteilung des Lothochzugs h auf einen Bereich zwischen minimal 1,31 mm und maximal 1,76 mm festgestellt. Dies entspricht im statistischen Mittel einem bedeutenden Anstieg des Lothochzugs h um 0,46 mm für den Fall der Verwendung eines Palladium-armen (mit < 5 Massen-% Pd) anstatt eines Palladium-reichen (mit 15 Massen-% Pd) Lots 7 zum Verlöten eines unvernickelten Grundkörpers 2 mit dem zweiten Leiter 6. Eine solche Vergrößerung des Lothochzugs h ist aber inakzeptabel, weil damit eine undeutlichere Ausprägung des Lotmeniskus 8 und folglich eine geringere Stabilität der Lötverbindung einhergeht (vgl. Fig. 2A und 2B).

Gemäß der vierten und letzten Spalte der Tabelle 3 werden für den Fall, dass bei einer vorvernickelten Edelstahloberfläche des Grundkörpers 2 ein besonders kostengünstiges Palladium-armes Lot (mit < 5 Massen-% Pd) zum Verlöten des zweiten Leiters (Massepins) 6 zum Einsatz gelangt, Lotmenisken 8 erhalten, deren Lothochzug h zwischen minimal 0,88 mm und maximal 1,09 mm schwankt. Dies entspricht im Mittel einer signifikaten Verkleinerung des Lothochzugs h des Lotmeniskus 8 um 0,59 mm gegenüber dem Fall, dass bei einer gleichen Lotzusammensetzung (mit < 5 Massen-% Pd) ein Grundkörper 2 ohne Nickelbeschichtung verwendet wird. Eine Abnahme der Höhe des Lotanstiegs am zweiten Leiter (Massepin) 6 ist wünschenswert, weil dadurch das Lot 7 den ringförmigen Grundkörper 2 besser benetzt und sich eine korrekte Lötstelle mit ordentlichem Lotmeniskus 8 ausprägen kann (vgl. Fig. 2A und 2B).

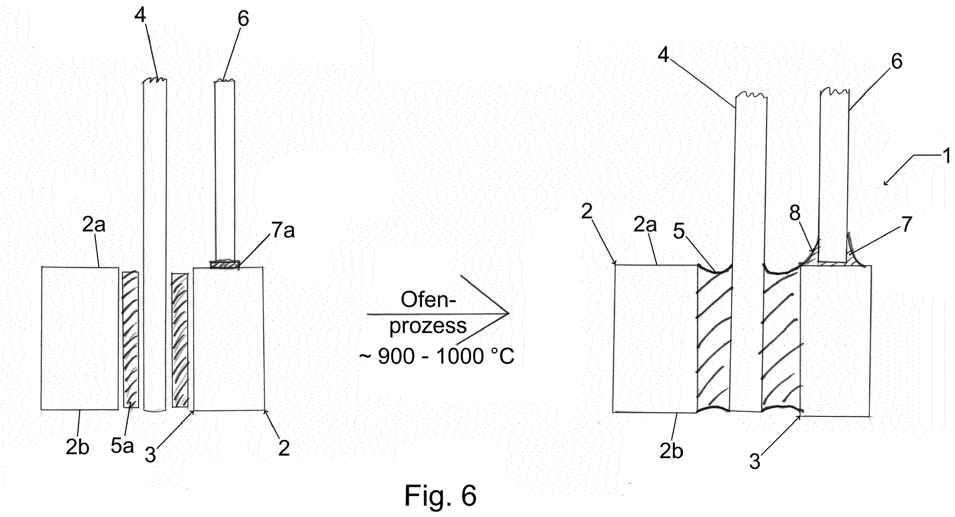

Wie aus Fig. 6 ersichtlich, wird zur Zündersockelherstellung ein Lot-Preform 7a und ein Glas-Preform 5a zusammen mit dem ringförmigen Grundkörper 2 aus Edelstahl (bevorzugt aus einem austenitischen Edelstahl, wie beispielsweise AISI 304, AISI 304L oder AISI 304HQ) mit einer Nickelbeschichtung von 0,2 µm bis 0,8 µm Dicke und den beiden stiftförmigen Leitern 4, 6 in eine Graphit-Form (nicht gezeigt) eingelegt. Das Bestücken der Graphit-Form kann dabei automatisiert erfolgen. Die derart bestückte Graphit-Form wird anschließend in einem Ofen (meist Durchlaufofen) unter Schutzgasatmosphäre erwärmt. Im Ofen herrscht eine Temperatur zwischen 900 °C und 1000 °C, wodurch gewährleistet ist, dass sowohl das Glas-Preform 5a als auch das Lot-Preform 7a ihren Schmelzbereich erreichen. Das geschmolzene Glas-Preform 5a füllt den Zwischenraum zwischen der Durchgangsöffnung 3 des Grundkörpers 2 und dem dort zentrisch eingeführten ersten Leiter 4 aus, um die erforderliche Dichtigkeit und mechanische Stabilität zu gewährleisten. Zudem benetzt das geschmolzene Material des deponierten Lot-Preforms 7a die zu lötenden Werkstücke (Grundkörper 2 und zweiter Leiter 6), fließt in den Lötspalt zwischen die beiden Werkstücke und füllt diesen aus. Nach Abkühlung wird eine Lötverbindung erzielt, welche durch die Materialien der gefügten Werkstücke sowie durch das Lot 7 gekennzeichnet ist.

Das Vorsehen einer Nickelbeschichtung auf der Grundkörperoberfläche führt nicht nur zu einer erheblichen Steigerung der Robustheit des Lötprozesses, indem erstmals die Möglichkeit eröffnet wird, Palladium-freie Lote 7 einzusetzen, sondern erlaubt vorteilhafterweise auch eine Senkung der an die Ofenatmosphäre zu stellenden Ansprüche. So kann die Schutzgasmenge im Durchlaufofen deutlich reduziert werden, wodurch sich auch signifikante Einsparungen der Betriebskosten ergeben. Da die Herstellung und der Transport der in einem Durchlaufofen zum Einsatz gelangenden Schutzgase (meist mehrere Komponenten, wie H₂, CO₂ und/oder N₂) sehr energieintensiv ist, können mit Einsparungen in diesem Bereich vorteilhafterweise auch deutliche ökologische Vorteile erzielt werden.

Infolge der geringen Oxidbildung in der Nickelbeschichtung sowie der rauen und/oder strukturierten Oberfläche einer solchen Beschichtung wird das Benetzungsverhalten des Lots 7 gefördert, sodass erstmals zur Herstellung der Lötverbindung zwischen Grundkörper 2 und zweitem Leiter 6 auch der Einsatz eines Palladium-freien Lots 7 oder eines Lots 7 mit stark reduziertem Palladium-Anteil ermöglicht wird. Von den Erfindern wurden umfangreiche Tests durchgeführt, um die mechanische Stabilität der Lötverbindung bei einem erfindungsgemäßen Zündersockel 1 zu überprüfen.

Insbesondere wurden diese Zündersockel 1 auf einer Biegevorrichtung einem Dauer-Biegetest unterzogen, bei dem der angelötete stiftförmige zweite Leiter 6 gegenüber dem Grundkörper 2 immer wiederkehrend um 90° von seiner Erstreckungsrichtung (möglichst nahe am Grundkörper) zu einer Seite abgewinkelt und danach wieder in seine ursprüngliche Ausgangslage zurückgebogen wurde. Diese Prozedur wurde so lange wiederholt, bis der Leiter (Pin) 6 sich entweder durch einen Riss der Lötung oder durch einen Riss des Leitermaterials vom Grundkörper 2 löst. Der Test gilt nur dann als bestanden, wenn die Lötung hält und das Leitermaterial selbst abreißt. Demzufolge wird bei diesem Test die metallische Lötverbindung einer Extrembelastung unterworfen.

Die Ergebnisse des vorerläuterten Dauer-Biegetests sind in der nachfolgenden Tabelle 4 anhand der für die drei verschiedenen Lot- und Substratmaterialien ermittelten Fehlerraten dargestellt.

**Tabelle 4**

| | **Fehlerrate Biegetest** | | |
|---|---|---|---|
| **Lot** | Hartlot mit 15% Pd | Hartlot mit < 5% Pd | Hartlot mit < 5% Pd |
| **Grundkörper** | Nicht vernickelt | Nicht vernickelt | Vernickelt |
| **Fehlerrate** | 2/2000 | 254/2000 | 0/2000 |

Wie daraus erkennbar, wurden bei Verwendung eines Grundkörpers 2 mit unvernickelter Oberfläche und eines Hartlots mit 15% Palladium-Massenanteil nur 0,2% Ausfälle beobachtet, wobei in der derzeitigen Serienfertigung alle mittels einer vollautomatischen 100%-Kameraprüfung als defekt oder fehlerhaft eingestuften Teile ausgeschleust werden.

Verwendet man den gleichen Grundkörper 2 mit unvernickelter Oberfläche jedoch zusammen mit einem Hartlot, das einen verringerten Palladium-Massenanteil von unter 5% aufweist, steigt die beobachtete Fehlerrate allerdings auf inakzeptable 12,7% an. Wird die Oberfläche des Grundkörpers 2 hingegen erfindungsgemäß vor dem Lötprozess mit einer Nickelbeschichtung versehen und zum Verlöten das gleiche Hartlot mit einem verringerten Palladium-Massenanteil von unter 5% verwendet, sinkt die Fehlerrate auf 0,0%.

Dies zeigt deutlich, dass trotz der Verwendung eines Palladium-freien oder in seinem Palladium-Anteil deutlich reduzierten Lots 7 in einem erfindungsgemäßen Zündersockel 1 keinerlei negative Auswirkungen auf die Qualität der Lötverbindung auftreten, die somit weiterhin den hohen Anforderungen an die Zuverlässigkeit der mit einem solchen Zündersockel 1 ausgestatteten Produkte (beispielsweise Airbagzünder) entspricht.

Im Ergebnis ist daher die Erfindung einerseits geeignet, auf der Material- und Betriebskostenseite erhebliche Einsparungen und damit eine Verbesserung der Ökobilanz zu erzielen, und andererseits in der Lage zu gewährleisten, dass der Zündersockel 1 weiterhin als Bestandteil von sicherheitsrelevanten Zündeinrichtungen (z. B. in Airbagzündern für automobile Anwendungen) eingesetzt werden kann.

## Patentansprüche

1. Zündersockel (1), umfassend:
- einen elektrisch leitfähigen Grundkörper (2) mit einer Durchgangsöffnung (3);
- einen in der Durchgangsöffnung (3) angeordneten ersten Leiter (4);
- eine in der Durchgangsöffnung (3) angeordnete und den ersten Leiter (4) gegenüber der Durchgangsöffnung (3) elektrisch isolierende Glasdichtung (5); und
- einen zweiten Leiter (6), der am Grundkörper (2) angelötet ist,
**dadurch gekennzeichnet, dass**
die Oberfläche des Grundkörpers (2) eine Nickelbeschichtung aufweist.

2. Zündersockel (1) nach Patentanspruch 1, **dadurch gekennzeichnet, dass** der Grundkörper (2) als ein ringförmiges metallisches Element ausgebildet ist.

3. Zündersockel (1) nach Patentanspruch 1 oder 2, **dadurch gekennzeichnet, dass** der nickelbeschichtete Grundwerkstoff des Grundkörpers (2) ein austenitischer Edelstahl, wie vorzugsweise AISI 304, AISI 304L oder AISI 304HQ, ist.

4. Zündersockel (1) nach einem der vorhergehenden Patentansprüche 1 bis 3, **dadurch gekennzeichnet, dass** die Nickelbeschichtung als Nickel-Strike-Schicht auf dem Grundkörper (2) aufgebracht ist.

5. Zündersockel (1) nach einem der vorhergehenden Patentansprüche 1 bis 4, **dadurch gekennzeichnet, dass** die Nickelbeschichtung des Grundkörpers (2) eine Schichtdicke von minimal 0,15 µm und maximal 1 µm, bevorzugt von minimal 0,2 µm und maximal 0,8 µm, aufweist.

6. Zündersockel (1) nach einem der vorhergehenden Patentansprüche 1 bis 5, **dadurch gekennzeichnet, dass** der zweite Leiter (6) stumpf an eine Stirnseite (2a) des Grundkörpers (2) angelötet ist.

7. Zündersockel (1) nach einem der vorhergehenden Patentansprüche 1 bis 6, **dadurch gekennzeichnet, dass** das zum Anlöten des zweiten Leiters (6) am Grundkörper (2) verwendete Lot (7) ein Hartlot auf Silber/Kupfer-Basis mit einem Massenanteil an Palladium unterhalb von 5,0% ist.

8. Zündersockel (1) nach einem der vorhergehenden Patentansprüche 1 bis 7, **dadurch gekennzeichnet, dass** das zum Anlöten des zweiten Leiters (6) am Grundkörper (2) verwendete Lot (7) ein Palladium-freies Hartlot, insbesondere ein Hartlot auf Basis einer Palladium-freien Silber-Kupfer-Germanium-Legierung, ist.

9. Zündersockel (1) nach einem der vorhergehenden Patentansprüche 1 bis 8, **dadurch gekennzeichnet, dass** der erste Leiter (4) und der zweite Leiter (6) jeweils als ein stiftförmiges metallisches Element, insbesondere aus einer Nickel-Eisen-Legierung, ausgebildet sind.

10. Verfahren zum Herstellen eines Zündersockels (1), umfassend die Verfahrensschritte:
- Erzeugen eines elektrisch leitfähigen Grundkörpers (2) mit einer Durchgangsöffnung (3) aus einem Halbzeug vordefinierter Dicke durch zumindest einen Trennvorgang und/oder eine spanabhebende Bearbeitung und/oder einen Kaltumformvorgang;
- Fixieren eines ersten Leiters (5) innerhalb der Durchgangsöffnung (3) mittels einer elektrisch isolierenden Glasdichtung (6); und
- Fixieren eines zweiten Leiters (6) am Grundkörper (2) mittels eines Lötvorgangs, **dadurch gekennzeichnet, dass**
- vor dem Lötvorgang das Halbzeug oder der daraus erzeugte Grundkörper (2) mit einer Nickelbeschichtung versehen wird.

11. Verfahren nach Anspruch 10, **dadurch gekennzeichnet, dass** die Nickelbeschichtung unter Anwendung eines Nickel-Strike-Verfahrens auf das Halbzeug oder den daraus erzeugten Grundkörper (2) mit einer Schichtdicke von 0,15 µm bis 1 µm, bevorzugt von 0,2 µm bis 0,8 µm, aufgebracht wird.

12. Verfahren nach Anspruch 10 oder 11, **dadurch gekennzeichnet, dass** der Grundkörper (2) durch einen Stanzvorgang aus dem Halbzeug herausgetrennt wird.

13. Verfahren nach einem der vorhergehenden Patentansprüche 10 bis 12, **dadurch gekennzeichnet, dass** das Fixieren des ersten Leiters (5) und des zweiten Leiters (6) zeitgleich realisiert wird.

14. Verfahren nach einem der vorhergehenden Patentansprüche 10 bis 13, **dadurch gekennzeichnet, dass** eine Graphit-Form mit den separaten Komponenten, bestehend aus Grundkörper (2), erstem Leiter (4), zweitem Leiter (6), Glas-Preform (5a) und Lot-Preform (7a), bestückt wird und die bestückte Graphit-Form in einem Durchlaufofen unter Schutzgasatmosphäre für eine bestimmte Zeit auf eine bestimmte Temperatur erwärmt und anschließend wieder abgekühlt wird, sodass das Einglasen des ersten Leiters (4) in der Durchgangsöffnung (3) und das Anlöten des zweiten Leiters (6) am Grundkörper (2) sichergestellt wird.

15. Airbagzünder, umfassend einen Zündersockel, der nach einem der vorhergehenden Patentansprüche 1 bis 9 ausgebildet ist und/oder durch ein Verfahren nach einem der vorhergehenden Patentansprüche 10 bis 14 hergestellt ist.
